(19) Europäisches Patentamt
European Patent Office
Office européen des brevets

(11) **EP 4 703 829 A1**

(12) **EUROPEAN PATENT APPLICATION**
published in accordance with Art. 153(4) EPC

(43) Date of publication:
04.03.2026 Bulletin 2026/10

(21) Application number: 23935487.1

(22) Date of filing: 28.04.2023

(51) International Patent Classification (IPC):
*G05D 1/20* (2024.01)     *B25J 9/16* (2006.01)
*G05D 1/246* (2024.01)

(52) Cooperative Patent Classification (CPC):
G05D 1/693; B25J 9/16; G05D 1/20; G05D 1/2469;
G05D 1/6987; G08G 1/0112; G08G 1/0145;
G08G 1/096725; G08G 1/096741; G08G 1/096775;
G08G 1/164; G05D 2109/10

(86) International application number:
PCT/KR2023/005925

(87) International publication number:
WO 2024/225513 (31.10.2024 Gazette 2024/44)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bear Robotics Korea, Inc.**
**Seoul 04779 (KR)**

(72) Inventor: **PARK, Susung**
**Seoul 06772 (KR)**

(74) Representative: **Murgitroyd & Company**
**165-169 Scotland Street**
**Glasgow G5 8PL (GB)**

(54) **ROBOT DRIVING CONTROL SYSTEM AND ROBOT CONTROL METHOD**

(57)     A robot driving control system and a robot control method are disclosed. The robot driving control system, according to the present invention, comprises: a plurality of robots driving within a predetermined space on a map; and a server which recognizes the predetermined space on the map by dividing the space into a plurality of areas, and communicates with the plurality of robots so as to control the driving of a robot which is about to pass a risk area requiring traffic control from among the plurality of areas. Here, the server registers, on the basis of the robot entering within a certain range of the risk area, the entering robot on a list for driving management, determines whether the entering robot satisfies a collisional condition in consideration of the direction of movement of other robots around the risk area, and restricts and controls the driving of the entering robot to drive according to a passing priority determined on the basis of the determination. Accordingly, when a plurality of robots approach a collision risk area, the robots wait and drive in an orderly manner according to the control of the server, thereby significantly reducing situations where an administrator must intervene and organize and preventing accidents in which robots collide and break.

FIG. 4

## Description

### TECHNICAL FIELD

The present disclosure relates to a robot driving control system and a robot control method, and more specifically, to a robot driving control system and a robot control method, in which a plurality of robots communicate with a server while driving in a predetermined space.

### BACKGROUND

A robot refers to a machine capable of autonomous driving to independently handle a given task, and robots are used in various fields. Such a robot is equipped with a plurality of sensors for avoiding obstacles during driving, which enable the robot to autonomously navigate, while avoiding the obstacles.

When multiple robots are driving within a service-providing space, collisions may occur among them. Specifically, when several robots among the multiple robots attempt to enter an intersection or a narrow passage simultaneously, a collision or deadlock may occur between the robots if their respective directions of movement are different.

In this regard, Korean Laid-Open Patent No. 10-2022-0010883 (hereinafter, 'Prior Art 1') discloses that when robots move heavy objects in a heavy industry factory, the multiple robots move while maintaining a formation, and also discloses that the robots form a cluster for driving to prevent collisions. However, when the driving paths and moving directions of the robots for performing their respective tasks are different, Prior Art 1 is difficult to apply.

Further, Korean Laid-Open Patent No. 10-2006-0083345 (hereinafter, 'Prior Art 2') discloses a technology for preventing collisions between multiple robots on an orthogonal intersection using an extended collision map. However, Prior Art 2 has a problem in that driving management is difficult when an intersection is not in an orthogonal shape or when a positioning error occurs depending on a network environment.

Moreover, Korean Laid-Open Patent No. 10-2021-0156413 (hereinafter, 'Prior Art 3') discloses a technology for locating a failed robot and generating an alternative path to avoid it. Prior Art 3 is a method of measuring the possibility of a collision between robots, using short-range communication sensitivity between the robots, and thus has limitations in controlling driving when a plurality of robots driving in different directions of movement converge on one location.

### DISCLOSURE

### TECHNICAL PROBLEM

Accordingly, an embodiment of the present disclosure provides a robot driving control system and a robot control method, which may preemptively control the driving of a robot attempting to enter a zone where a collision is expected, while a plurality of robots perform their respective tasks in the same space.

Further, an embodiment of the present disclosure provides a robot driving control system and a robot control method, which are implemented to enable robots expected to collide to drive in an appropriate sequence without a collision, regardless of the location, shape, or network environment of a zone requiring traffic control.

Further, an embodiment of the present disclosure provides a robot driving control system and a robot control method, in which an expected separation distance between a plurality of robots is calculated without relying on sensors of a robot, and the robot is allowed to stop or wait for driving at an appropriate location before reaching a point where a collision is expected.

### TECHNICAL SOLUTION

According to an embodiment of the present disclosure, driving of a robot may be controlled by a server, so that the robot does not collide with other robots when driving through a critical zone requiring traffic control while traveling in a predetermined space on a topological map.

Further, according to the present disclosure, an expected collision point of the robot attempting to pass through the critical zone is predicted, and the robot is controlled to stop or perform avoidance driving before reaching the expected collision point. Therefore, the robot may pass through the critical zone in an orderly manner.

Specifically, a robot driving control system according to the present disclosure may include a plurality of robots driving in a predetermined space on a map, and a server recognizing the predetermined space on the map by dividing the predetermined space into a plurality of zones, and controlling driving of a robot attempting to pass through a critical zone requiring traffic control among the plurality of zones by communicating with the plurality of robots. The server may register the robot in a driving management list based on the robot entering within a predetermined range of the critical zone, determine whether the entering robot satisfies a collision condition by considering moving directions of other robots around the critical zone, and control driving of the entering robot for the entering robot to drive according to a predetermined passage priority based on the determination.

According to an embodiment, the other robots are robots already registered in the driving management list, and the server calculates a minimum value of expected separation distances between the entering robot and the other robots by considering a driving direction of the entering robot and the moving directions of the other robots, and determines whether the collision condition is satisfied based on the calculated minimum value.

According to an embodiment, the server calculates expected arrival times of the entering robot and the other robots, respectively, for each of entry points of a plurality of margin sections set around a boundary node of the critical zone, from a first point where the entering robot enters the predetermined range to a second point that the entering robot reaches after driving a predetermined distance past the critical zone, and calculates the minimum value of the expected separation distances based on the calculated expected arrival times for each entry point.

According to an embodiment, a distance between the entry points of the plurality of margin sections is changeable based on at least one environmental factor among physical characteristics of the robot, a speed profile of the robot, a network delay environment, and characteristics of the map.

According to an embodiment, when the calculated minimum value of the expected separation distances is less than or equal to a threshold, the server determines that the collision condition is satisfied, and transmits a control command for controlling the driving of the entering robot before the entering robot reaches a point where the collision condition is satisfied.

According to an embodiment, the server transmits a first control command for the entering robot to stop or perform avoidance driving before the entering robot reaches the point where the collision condition is satisfied before reaching the critical zone.

According to an embodiment, in response to the entering robot not satisfying the collision condition or the passage priority being a highest priority, the server transmits a second control command for the entering robot to drive through the critical zone, and updates passage priorities of the robots in the list.

According to an embodiment, the server registers the entering robot in the list at a time when a changed first position status value is transmitted from the entering robot, and sequentially determines the collision condition and the passage priority of the entering robot, including passage priorities of the other robots registered in the list.

According to an embodiment, when the server transmits a driving control command to the entering robot according to the predetermined passage priority, the entering robot transmits a motion status value corresponding to the transmitted control command to the server and performs a motion corresponding to the motion status value.

According to an embodiment, in response to a position of the entering robot reaching the critical zone, the entering robot transmits a changed second position status value to the server, and the server deletes the entering robot from the list.

Further, a robot control method including a plurality of robots driving in a predetermined space on a map and a server communicating with the plurality of robots may include recognizing the predetermined space on the map by dividing the predetermined space into a plurality of zones, detecting that a robot attempting to pass through a critical zone requiring traffic control among the plurality of zones enters a predetermined range of the critical zone, determining whether the entering robot satisfies a collision condition by considering moving directions of other robots around the critical zone, and controlling driving of the entering robot for the entering robot to drive according to a predetermined passage priority based on the determination.

**ADVANTAGEOUS EFFECTS**

In the robot driving control system and robot control method according to an embodiment of the present disclosure, when a plurality of robots approach a critical zone, the robots are commanded to stop at appropriate locations according to their priorities, thereby allowing them to orderly wait and drive based on the control. This significantly reduces situations where a manager should intervene to resolve congestion, and prevents accidents where robots collide and are damaged.

Further, in the robot driving control system and robot control method according to an embodiment of the present disclosure, a critical zone may be designated regardless of the location and shape of a zone requiring traffic control, and robust traffic control is possible in the critical zone even if a positioning error occurs due to a slightly unstable network environment.

Further, in the robot driving control system and robot control method according to an embodiment of the present disclosure, an expected collision point may be identified by calculating an expected separation distance between a plurality of robots by a server, not based on sensors of the robots or short-range communication between the robots, allowing a robot to wait for driving at an appropriate location within a margin distance before a collision, and to immediately resume driving when the collision risk is resolved.

## BRIEF DESCRIPTION OF THE DRAWINGS

FIG. 1 is an exemplary block diagram illustrating a robot driving control system related to the present disclosure.

FIG. 2 is a diagram illustrating the detailed configuration of each of a robot and a server related to the present disclosure, and illustrating a critical zone where a collision is expected.

FIG. 3 is a representative flowchart illustrating a robot control method related to the present disclosure.

FIG. 4 is an exemplary conceptual diagram specifically illustrating a method for preventing a collision by using a margin distance for a robot attempting to enter a critical zone, in relation to the present disclosure.

FIGS. 5 to 7 are conceptual diagrams illustrating a method for calculating an expected separation distance between robots existing around a critical zone.

FIG. 8 is a flowchart illustrating a method for driving through a critical zone without a collision by a robot under the control of a server, in relation to the present disclosure.

## DETAILED DESCRIPTION

Embodiments disclosed herein will be described in detail with reference to the attached drawings. Through the drawings, like reference numerals denote the same or similar components and a redundant description of the components will be avoided. The suffixes "module" and "unit" used for components in the following description are given or used interchangeably only for the convenience of description, and do not have distinct meanings or roles in themselves. In addition, when describing the embodiments disclosed herein, a detailed description of a related known technology will be omitted lest it should obscure the subject matter of the embodiments. In addition, the attached drawings are only intended to facilitate easy understanding of the embodiments disclosed herein, and do not limit the technical ideas disclosed in the specification, which should be understood to include all modifications, equivalents, or substitutes included in the scope of the present disclosure.

Terms including ordinal numbers such as first, second, and so on may be used to describe various components. However, the components are not limited by the terms. The above terms are used only for the purpose of distinguishing one component from another.

When it is said that a component is "coupled" or "connected" to another component, the components should be understood as directly connected or connected with a third component in between. On the other hand, when it is said that a component is "directly coupled" or "directly connected" to another component, it should be understood that there are no other components in between.

A singular expression includes plural referents unless the context clearly indicates otherwise.

In this application, the term "comprise" or "have(has)" is intended to specify the presence of a feature, number, step, operation, component, part, or combination thereof described in the specification, not excluding the possibility of the presence or addition of one or more other features, numbers, steps, operations, components, parts, or combinations thereof.

A "robot" disclosed in the present disclosure refers to a machine capable of performing a predetermined task or mission while driving autonomously. In the present disclosure, the robot may be used to mean a plurality of robots that drive in a predetermined space and are capable of performing their predetermined tasks or missions, such as a plurality of logistics robots, delivery robots, or other mobile robots. In this case, while the robots perform their respective tasks or missions, they may converge on an area such as an intersection or a collision may be expected, depending on their driving paths or moving directions.

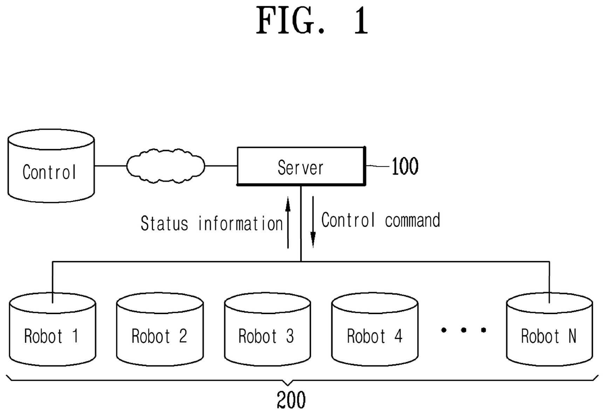

FIG. 1 is an exemplary block diagram illustrating a robot driving control system related to the present disclosure.

Referring to FIG. 1, the robot driving control system includes robots 200 and a server 100 communicating with the robots. The server 100 may receive status information from the robots 200 and transmit a control command to each robot 200 based on the received status information.

The robots 200 are a plurality of robots that drive in a predetermined space on a map, which may include, for example, robot 1, robot 2, ... robot N.

The map is, for example, a map of a driving area, and may include, for example, a navigation map, a simultaneous localization and mapping (SLAM) map, a learning map, a topological map, a grid map based on cell data, an obstacle recognition map, and so on.

In the present disclosure, the description is based on the premise that the robots 200 drive in a predetermined space on a topological map used for global positioning, which should not be construed as limiting.

The server 100 may communicate with the robots 200 through wired or wireless communication. For example, the robots 200 may communicate with the server 100 using wireless communication schemes such as wireless LAN (WLAN), wireless-fidelity (Wi-Fi), Wi-Fi Direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), and so on.

As illustrated in FIG. 1, the server 100 may communicate with another control server to receive a task or mission for each robot 200 and allocate it to the robot 200.

The server 100 may recognize a space where the robots drive on the map, for example, a topological map by dividing it into a plurality of zones. Specifically, the server 100 may recognize the space by dividing it into a critical zone requiring traffic control, a zone around the critical zone, in which a robot waits for driving or prepares for avoidance before entering the critical zone, and a free zone which does not require control, among the plurality of zones.

The critical zone refers to a designated (internal) area requiring traffic control by the server 100, such as an intersection, a one-way driving passage, or other narrow passages (e.g., a narrow section where only one robot may pass) in which a robot collision is expected to occur.

Further, the zone around the control zone is an area where preparations such as driving waiting or avoidance should be made in advance, when a collision between robots 200 is expected, and it may be referred to as a 'control zone' or a 'predetermined-range zone including the critical zone' where control is performed by the server 100.

Hereinafter, when it is said that the robot 200 enters within a predetermined range of the critical zone, this may mean that the robot 200 enters the boundary of the 'control zone' or the 'predetermined-range zone including the critical zone'.

In the present disclosure, to prevent a collision between robots, control should be initiated from a boundary point of the 'control zone' or the 'predetermined-range zone including the critical zone' before a robot 200 enters the critical zone. Therefore, traffic control is performed by the server 100 until the robot drives past the critical zone and leaves the predetermined range, after the robot enters within the predetermined range of the critical zone.

While the robot 200 drives in the free zone of the predetermined space, it is not controlled by the server 100 and performs its driving based on its own sensors to carry out a predetermined task or mission.

When the robot 200 enters within the predetermined range of the critical zone, the server 100 receives (position) status information from the robot 200 and performs the following process for traffic control for the robot 200.

Based on the robot 200 entering within the predetermined range of the critical zone, the server 100 registers the entering robot in a list for driving management.

The registration in the list may mean adding information about the entering robot to a memory stack/queue managed by the server 100. Based on position information received from the robot 200 (e.g., a position at which the robot 200 occupies/passes the boundary point of the control zone), the server 100 may register (input) the robot as requiring traffic control in the list or delete the robot as requiring no further control from the list.

Once a robot requiring traffic control is registered in the list, the server 100 determines whether the entering robot satisfies a collision condition by considering the moving directions of other robots around the critical zone.

The other robots around the critical zone refer to robots that are occupying the critical zone or are within the predetermined range of the critical zone, meaning robots registered in the list. Further, the other robots include both robots driving in directions away from the critical zone and robots entering (moving towards) the critical zone.

Additionally, the collision condition means that a collision is expected from expected separation distances between the entering robot and the other robots, calculated by considering the moving directions of the other robots while the entering robot is passing through the control zone - the critical zone - the control zone.

Specifically, when the minimum value of the expected separation distances between the robots is smaller than a value corresponding to the collision condition (e.g., the sum of the radii of two robots), a collision is expected, and it is determined that the collision condition is satisfied. On the contrary, when the minimum value of the expected separation distances between the robots is greater than the value corresponding to the collision condition, it is determined that the collision condition is not satisfied.

The determination of whether an expected separation distance between robots satisfies the collision condition is performed for all robots registered in the list. The server 100 calculates only an expected separation distance between robots within the control zone set around the designated critical zone, and deletes some of the robots registered in the list with the passage of time, which is advantageous in terms of computational complexity.

Based on the determination of whether the entering robot satisfies the collision condition, the server 100 transmits a control command to the entering robot to drive through the control zone - critical zone - control zone according to a predetermined passage priority. The entering robot may wait for driving at an appropriate location in the control zone, perform avoidance driving, or continue driving towards the critical zone according to the control command transmitted from the server 100.

Status information of a robot that has passed the control zone - the critical zone - the control zone is transmitted to the server 100, and the server deletes the robot from the list. Thereafter, when a new robot is added to the list, the above-described routine of calculating an expected separation distance, determining whether the collision condition is satisfied, and transmitting a control command is repeated.

In this way, according to the robot driving control system of the present disclosure, when a plurality of robots approach the critical zone, the server predicts a collision and commands a robot to stop at an appropriate location or pass through directly according to the passage priority of the robot, allowing the plurality of robots to drive in an orderly manner.

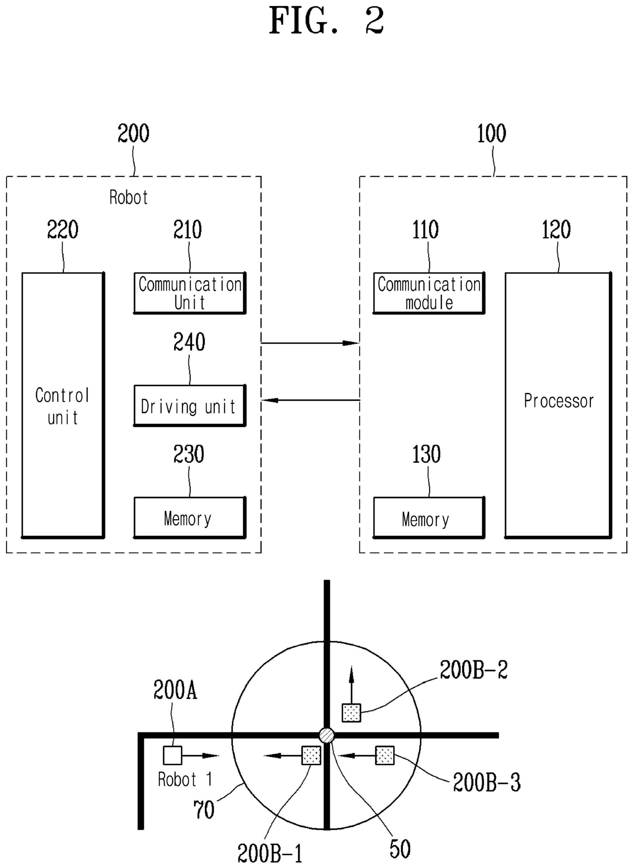

FIG. 2 is a diagram illustrating the detailed configuration of each of a robot and a server related to the present disclosure, and illustrating a critical zone where a collision is expected.

Referring to FIG. 2, the robot 200 may communicate with the server 100, and may include a communication unit 210, a controller 220, a memory 230, and a driving unit 240. However, the components illustrated in FIG. 2 are not essential for implementing the robot, and the robot 200 disclosed in the present disclosure may include more or fewer components than those described above.

The communication unit 210 of the robot 200 may include one or more modules that enable wireless communication with the server 100 and one or more modules for connecting the robot 200 to a network.

The communication unit 210 of the robot 200 may perform communication with an artificial intelligence (AI) server by wireless Internet communication technologies such as WLAN, Wi-Fi, Wi-Fi Direct, DLNA, WiBro, WiMAX, HSDPA, HSUPA, LTE, and LTE-A. Additionally, the communication unit 210 may communicate with the server 100 using short-range communication technologies such as Bluetooth™, radio frequency identification (RFID), infrared data association (IrDA), ultra wideband (UWB), ZigBee, and near field communication (NFC).

The robot 200 may transmit its status information to a communication module 110 of the server 100 via the communication unit 210. For example, the robot 200 may transmit a changed position status/motion status value to the communication module 110 of the server 100 via the communication unit 210.

The robot 200 may receive a driving control command based on its passage priority for the critical zone from the communication module 110 of the server 100 via the communication unit 210. For example, the robot 200 may receive a driving stop command, an avoidance driving command, or a driving resume command via the communication unit 210 according to its passage priority.

The controller 220 of the robot 200 typically provides overall control to the operation of the robot 200. The controller 220 may provide or process appropriate information or function to a user by processing a signal, data, information, and so on input or output through the components described above, executing an application program stored in the memory 230, or controlling the driving unit 240.

Although not shown, the controller 220 of the robot 200 may include a learning processor (not shown) to perform an operation related to the AI technology of the robot. The learning processor may train one or more models including an artificial neural network with training data. For this purpose, the learning processor may be configured to receive, classify, store, and output information to be used for data mining, data analysis, intelligent decision-making, and a machine learning algorithm and technique. Further, the learning processor may include one or more memory units configured to store information received, detected, sensed, generated, predefined, or output otherwise by the robot, or to store data received, detected, sensed, generated, predefined, or output by other components, devices, and terminals. The learning processor may be integrated into the robot or include a memory. In an embodiment, the learning processor may be implemented through the memory 230. However, the present disclosure is not limited thereto, and the learning processor may be implemented in an external memory related to the robot 200 or through a memory 130 of the server 100 communicable with the robot 200. In another embodiment, the learning processor may also be implemented through a memory maintained in a cloud computing environment, or another remote memory accessible by a guidance robot through a communication scheme such as a network.

The memory 230 of the robot 200 stores data that supports various functions of the robot 200. The memory 230 may store a plurality of application programs or applications running on the robot 200, and data and instructions for the operation of the robot 200. Further, the memory 230 may store map data for a space in which the robot 200 drives to perform a task or mission.

The memory 230 may include at least one type of storage medium of, for example, a hard disk type, a solid state disk (SSD) type, a silicon disk drive (SDD) type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, or optical disk.

The driving unit 240 of the robot 200 performs driving such as movement and rotation of a robot body. To this end, the driving unit 240 may include a plurality of driving wheels, a driving motor, and a plurality of casters. The driving unit 240 performs driving according to a control command received by the controller 220 of the robot 200 or according to a driving control command based on a passage priority, received from the server 100.

Although not shown, the robot 200 may be provided with various sensors for avoiding obstacles while driving in a predetermined space, such as a camera, an IR sensor, a LiDAR, a radar, a proximity sensor, and a UWB sensor. Additionally, the robot 200 may include a power supply for receiving external or internal power and supplying the power to each component included in the robot 200 under the control of the controller 220. The power supply may include a battery, and the battery may be implemented as a built-in or replaceable type.

At least some of the above components may cooperate to implement the operation, control, or control method of the robot according to various embodiments described below. Further, the operation, control, or control method of the robot may be implemented on the robot by executing at least one application program stored in the memory 230. Further, various embodiments disclosed hereinafter may be implemented in a computer-readable recording medium using, for example, software, hardware, or a combination thereof.

As illustrated in FIG. 1, the server 100 may include the communication module 110 for communicating with a plurality of robots, a processor 120, and the memory 130.

The communication module 110 of the server receives status information (e.g., identification data, position status/motion status values, and so on) from the plurality of communicating robots. For example, the communication module 110 receives a changed position status value from a robot that has entered a boundary 70 (in FIG. 2) of the control zone and provides it to the processor 120. The communication module 110 of the server 100 transmits a driving control command according to a passage priority determined by the processor 120 to the robot that has entered a boundary point of the control zone.

The processor 120 controls and regulates the driving of the robot from a time the robot enters the boundary 70 of the control zone until it passes a critical zone 50 (in FIG. 2) and leaves the boundary 70 of the control zone. That is, the robot that has entered the boundary 70 of the control zone may perform stopping, avoidance, or driving based on the driving control command generated by the processor 120 of the server 100.

The memory 130 of the server 100 stores map data for a space in which the robot 200 drives. The memory 130 also stores a list including the robot to manage the driving of the robot that has entered the boundary 70 of the control zone.

To this end, the memory 130 may include a separate stack memory or queue memory for storing the list. In this case, when a robot enters the boundary 70 of the control zone, information about the robot is added to the stack memory or queue memory, and when the robot leaves the boundary 70 of the control zone, the information about the robot is deleted from the stack memory or queue memory.

The processor 120 recognizes a zone requiring traffic control, that is, a critical zone, in a predetermined space on the map, and controls driving between robots around the critical zone. Therefore, while the robot 200 drives in a free zone, the robot drives based on its own sensors and judgment without control of the processor 120 of the server 100.

In FIG. 2, it is assumed that robot 1 200A is attempting to enter the critical zone 50, for example, an intersection, which requires traffic control. Since other moving robots 200B-1, 200B-2, and 200B-3 already exist around the critical zone 50, a collision is expected with some of the other robots 200B-1, 200B-2, and 200B-3 if robot 1 200A continues driving along its path. Accordingly, the server 100 controls the driving of robot 1 200A from a time point when it enters the boundary 70 of the control zone before reaching the defined critical zone 50.

The processor 120 registers the robot that has entered the boundary 70 of the control zone, that is, robot 1 200A, in the list for driving management, determines whether the collision condition is satisfied with the other robots already registered in the list, and subsequently determines a passage priority for robot 1 200A and provides a driving control command (e.g., stop/avoid/drive).

According to an embodiment, the processor 120 may calculate a minimum value of expected separation distances between the entering robot (e.g., robot 1 200A) and the other robots (e.g., 200B-1, 200B-2, and 200B-3) by considering the driving direction of the entering robot and the respective moving directions of the other robots around the critical zone 50. Although a method for calculating an expected separation distance will be described in more detail below, it may be obtained by subdividing the control zone around the critical zone 50 and calculating expected arrival times of each robot for boundary points of the subdivided sections.

The processor 120 may determine whether the collision condition between the robots is satisfied based on the calculated minimum value, and control the driving of the robot according to the determined passage priority, based on the determination.

The determined passage priority may vary depending on a method for storing and accessing the list in the memory. For example, when a queue memory is used to manage the list, a robot input first has a higher priority, and a robot input later has a lower priority. However, in special circumstances, a stack memory may be added to assign a higher passage priority to a robot input later.

In the present disclosure, it has been described that in a normal case, the passage priorities of robots are determined using a queue memory, and in a case satisfying a specific condition, a higher priority is exceptionally assigned to a robot input later using a stack memory. The specific condition may mean satisfying a context such as a robot assigned a task/mission requiring urgency or a robot that has nearly reached its destination.

Since the other robots (e.g., the other robots 200B-1, 200B-2, and 200B-3) around the critical zone 50 already exist in the list before the robot that entered the boundary 70 of the control zone, for example, robot 1 200A is registered, the processor 120 determines expected separation distances, whether the collision condition is satisfied, and the resulting passage priorities by considering robot 1 200A and the other robots (e.g., 200B-1, 200B-2, and 200B-3).

According to an embodiment, the server 100 may divide an area, which ranges from a first point where the entering robot enters within a predetermined range of the critical zone 50, that is, the boundary 70 of the control zone to a second point after driving a specific distance past the critical zone 50, that is, the boundary 70 of the control zone again, into a plurality of sections with respect to a boundary node of the critical zone.

The plurality of sections may be named 'margin sections' because they should be defined by considering expected positions of other robots and a network time when a command is received from the server 100 in order to allow the entering robot to pass through the critical zone in an orderly manner without colliding with the other robots.

The processor 120 of the server 100 may calculate expected arrival times of the entering robot and the other robot, respectively, for each of entry points of the plurality of margin sections set around the boundary node of the critical zone in this manner. The processor 120 may also calculate the minimum value of expected separation distances between the robots based on the calculated expected arrival times of the robots for each of the entry points of the margin sections.

Once the minimum value of the expected separation distances between the robots is calculated, the processor 120 may calculate an expected collision point between the robots and transmit a driving control command to ensure the robot is controlled in advance in a margin section before it reaches the expected collision point.

In this way, according to the robot driving control system and robot control method disclosed in the present disclosure, in a situation where a plurality of robots may converge, an expected collision point may be identified by calculating expected separation distances between the plurality of robots by the server, without relying on the sensors of the robots or short-range communication between the robots, and a robot may be allowed to wait for driving at an appropriate location within a margin distance before the collision and to immediately resume driving when the collision risk is resolved.

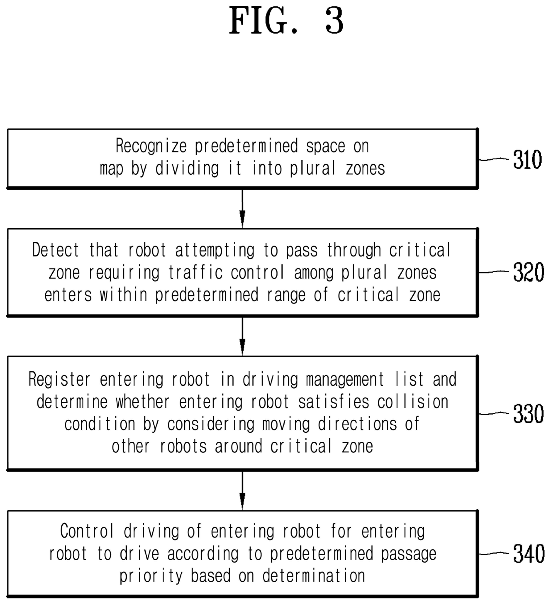

FIG. 3 is a representative flowchart illustrating a robot control method related to the present disclosure.

Each process in the flowchart in FIG. 3 is performed by the server 100 (in FIG. 1) communicating with a plurality of robots, and more specifically, by the processor 120 of the server. When a robot enters within a predetermined range of a critical zone requiring traffic control, the server 100 may control and regulate the driving of the robot so that the plurality of robots may drive in an orderly manner without colliding with each other.

Referring to FIG. 3, the server 100 (in FIG. 1) may communicate with a plurality of robots and recognize a predetermined space on a topological map, in which the plurality of robots drive, by dividing it into a plurality of zones (310).

The server may define a critical zone requiring traffic control among the plurality of zones, and detect that a robot attempting to pass through the critical zone has entered within a predetermined range of the critical zone (320).

As described above, the plurality of zones may be divided into a critical zone requiring traffic control, a zone (control zone) around the critical zone, in which a robot waits for driving or prepares for avoidance before entering the critical zone, and a free zone which does not require control.

Within the predetermined range of the critical zone means the boundary (point) of the 'control zone' where driving is controlled by the server 100, which is a peripheral area including the critical zone, as described before. The robot that has entered within the predetermined range means that it is located at the boundary of the predetermined range. When the robot transmits a changed position status value (e.g., the coordinates of the boundary of the control zone) to the server 100, the server 100 recognizes that the robot has entered within the predetermined range.

According to an embodiment, the size of the predetermined range of the critical zone may be differently determined based on at least one environmental factor among the physical characteristics of the robot, the speed profile of the robot, a network delay environment, and the characteristics of the map.

The physical characteristics of the robot may include, for example, the size and weight of the robot. The speed profile of the robot means, for example, an actual acceleration/deceleration of the robot, considering the performance of the driving unit of the robot and the characteristics of a space in which the robot operates. Additionally, the network delay environment corresponds to an increase or decrease in a network latency, for example. Further, the characteristics of the map may include environmental factors such as when the critical zone is narrow or the distance between critical zones is small due to the characteristics of the space, for example, when the space in which the robot operates includes narrow passages and central aisles where the distance between intersections becomes short, such as in a logistics warehouse or a library.

In this case, the server 100 may appropriately change and apply the size of the predetermined range or the sizes of a plurality of margin sections.

The server 100 registers the robot that has entered within the predetermined range in a list for driving management, and determines whether the entering robot satisfies a collision condition by considering the moving directions of other robots around the critical zone (330).

Satisfaction of the collision condition means that the minimum value of expected separation distances between the entering robot and the other robots around the critical zone is smaller than a value corresponding to the collision condition. The value corresponding to the collision condition may be set to a value equal to or less than the sum of the radii of robots.

When it is said that the moving directions of the robots are considered in determining whether the collision condition is satisfied, this may imply, for example, that when the moving directions of two robots are the same, it is considered that a collision will not occur even if the expected separation distance between them becomes smaller.

Subsequently, the server 100 controls the driving of the entering robot to drive according to a predetermined passage priority, based on the determination of whether the collision condition is satisfied (340). A point where the collision condition is satisfied means an expected collision point between two robots. Thus, the server 100 may calculate the expected collision point between the robots (more precisely, the point that satisfies the collision condition) by calculating the expected separation distance.

Specifically, according to an embodiment, the server 100 may transmit a first control command, so that the entering robot stops or performs avoidance driving before the entering robot reaches the critical zone and before it reaches the point that satisfies the collision condition. That is, the server 100 transmits a driving control command including a margin distance, to ensure that a low-priority robot expected to be collided stops or performs avoidance driving at an appropriate location.

The robot 200 stops or performs avoidance driving at an appropriate location according to the first control command and transmits a corresponding changed motion status value to the server 100. Consequently, a situation where approaching robots recognize each other as an obstacle and are not capable of exiting an area around the critical zone does not occur.

Additionally, according to an embodiment, the server 100 may transmit a second control command so that the entering robot drives through the critical zone, in response to the entering robot not satisfying the collision condition or the passage priority being the highest priority. For example, when no other robots are present around the critical zone or a collision is not expected considering the moving directions, the second control command may be transmitted immediately to the entering robot. However, even in this case, the routine of registering the entering robot in the list and then deleting it from the list after the robot passes the critical zone is also performed.

After transmitting the second control command, the server 100 may update the passage priorities of the robots in the list. Accordingly, the entering robot may be deleted from the list, or the second control command may be transmitted to a robot having the next passage priority in the list.

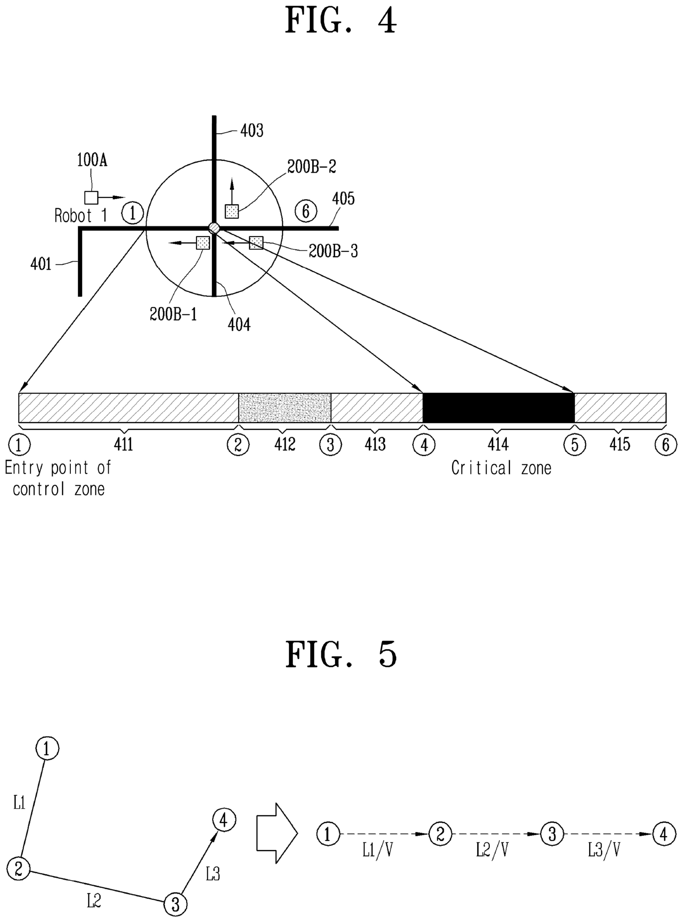

It should be guaranteed that the first control command, the second control command, and the corresponding motion of the robot motion are executed at an appropriate location before a collision occurs between all robots in the critical zone. FIG. 4 is for describing a method for preventing a collision in relation to a 'margin distance' ensuring that a robot is controlled at an appropriate location.

FIG. 4 is an exemplary conceptual diagram specifically illustrating a method for preventing a collision by using a margin distance for a robot attempting to enter a critical zone, in relation to the present disclosure.

Referring to FIG. 4, the server 100 controls the driving of robot 1 100A from a first point where robot 1 100A enters within a predetermined range of a critical zone 414, that is, an entry point ① of a control zone until it reaches a second point after driving a specific distance past the critical zone 414, that is, an exit point ⑥ of the control zone.

The server 100 sets a plurality of margin distances with respect to the critical zone 414 and determines the collision condition between robots based on a boundary point of each margin distance.

The plurality of margin distances for the control zone are shown in FIG. 4 based on an expected driving direction of robot 1 100A. Therefore, for the robot 200B-3 with a different moving direction from robot 1 100A, for example, the sequence may be understood to be assigned from right to left, contrary to the symbols ①, ②, ③, ④, ⑤, and ⑥ in FIG. 4.

The server 100 may calculate expected arrival times of an entering robot (e.g., robot 1 100A) and the other robots 200B-1, 200B-2, and 200B-3, respectively, for entry points ①, ②, ③, and ⑤ of a plurality of margin sections 411, 412, 413, and 415 set around boundary nodes ④ and ⑤ of the critical zone 414. The server 100 may calculate the minimum value of expected separation distances between the robots, based on the calculated expected arrival times for each entry point.

With reference to FIG. 4, the plurality of margin sections 411, 412, 413, and 415 will be described below.

The plurality of margin sections 411, 412, 413, and 415 are set with respect to the critical zone 414. The plurality of margin sections 411, 412, 413, and 415 may be divided into a first section 411, a second section 412, and a third section 413 before the critical zone 414, and a fourth section 415 after the critical zone 414. However, the number and lengths of the margin sections are not limited to those illustrated in FIG. 4, and may vary depending on environmental factors such as the characteristics of the robots and the characteristics of a map, as described later.

The first section 411 may be a section bounded by the entry point ① of the control zone and the entry point ② of a margin section where it is determined whether a robot enters the critical zone. The first section 411 is included in the control zone but is a non-critical zone, and its length may be set to about 3m.

The second section 412 may be a section bounded by the entry point ② of the margin section where it is determined whether the robot enters the critical zone and the entry point ③ of a margin section where it is determined that the robot occupies the critical zone. The second section 412 is a margin section where the robot receives a driving control command from the server 100 and performs a motion, and it may be set to about 1m, considering a network communication delay.

The third section 413 may be a section bounded by the entry point ③ of the margin section where it is determined that the robot occupies the critical zone and the entry point ④ of the actual critical zone on the map, that is, a section bounded by a boundary node of the critical zone. The third section 413 is a section where even though the robot has not reached the critical zone, its position status value is determined as indicating occupancy of the critical zone, and it may be set to about 1m before the critical zone 414.

The fourth section 415 may be a section bounded by the exit point ⑤ of the actual critical zone and the end point ⑥ at which the robot ends the occupancy of the critical zone. The fourth section 415 is a section where the position status value of the robot is determined to indicate ended occupancy of the critical zone, and it may be set to about 1m after the critical zone 414.

According to an embodiment, the distance between every two of the entry points ①, ②, ③, and ⑤ of the plurality of margin sections 411, 412, 413, and 415 may be changed based on at least one environmental factor among the physical characteristics (e.g., size, weight, and so on) of the robot, the speed profile of the robot (the performance of the driving unit of the robot and an actual acceleration/deceleration of the robot considering the characteristics of a space in which the robot operates), a network delay environment (e.g., an increase or a decrease in a network latency), or the characteristics of the map (e.g., when the critical zone is narrow or the distance between critical zones is short due to the characteristics of the space).

When the robot enters a boundary node of the first section 411, that is, the entry point ① of the control zone, the server 100 registers the robot in the list for driving management based on a changed position status value transmitted from the robot. Then, the server 100 calculates the minimum value of expected separation distances between the robots registered in the list, based on expected arrival times for each of the entry points of the plurality of margin distances.

When the calculated minimum value of the expected separation distances is less than or equal to a threshold (a value that satisfies a collision condition), the server 100 determines that the collision condition is satisfied between the robots, and transmits a control command to control (regulate) the driving of the robot that entered the control zone, before it reaches a point where the collision condition is satisfied during its travel.

The server 100 registers the entering robot in the list at a time the changed first position status value is transmitted from the robot that has reached the entry point ① of the control zone, and sequentially determines the collision condition and passage priority of the entering robot, including the passage priorities of the other robots registered in the list.

The changed first position status value is status data InControlZone changed as the robot enters the control zone from the free zone. For example, while the robot drives in the free zone, the status data maintains an InFreeZone value, and upon entering the control zone, the robot transmits the changed status data, that is, the InControlZone value to the server 100.

The robot continuously transmits its status information to the server 100 even after entering the control zone. When the robot reaches a margin section before the critical zone 414, for example, the entry point ③ of the third section 413, after entering the control zone, it transmits a changed second position status value, that is, an InCriticalZone value to the server 100, thereby informing the server 100 that the robot is in a critical zone occupied state.

Referring to FIG. 4, when robot 1 100A passes link 1 401, which is the free zone, and enters the control zone, driving control by the server 100 is initiated. The collision possibility and passage priority of robot 1 100A within the control zone are sequentially determined, considering a direction in which robot 1 100A will drive among link 2 403, link 3 403, and link 4 405 after passing the critical zone 414, and the respective moving directions of the other robots 200B-1, 200B-2, and 200B-3 around the critical zone 414.

When robot 1 100A passes the entry point ① of the control zone, the position status value of the robot changes to a first position status value, that is, InControlZone.

Then, the server 100 registers robot 1 100A in the list for driving control, PendingClientList and includes robot 1 100A in the routine of calculating the passage priorities of the robots in the list. Upon registration of a new robot in the list PendingClientList or upon detection of a robot passing the entry point ② of the margin section where entry into the critical zone is determined, the routine of calculating the passage priorities of the robots is repeatedly performed.

Thereafter, when robot 1 100A passes the entry point ② of the margin section where entry into the critical zone is determined, the server 100 should immediately transmit a drive or wait command, considering the dynamic inertia of the driving robot and a network communication delay.

To this end, the server 100 determines the passage priorities of the robots registered in the list, and transmits a command to robot 1 100A to either pass through the section or wait according to the determined passage priorities.

When robot 1 100A is commanded to pass through the section due to a high passage priority, its motion status value remains as OnPrimaryPath, allowing it to pass through the critical zone 414. Conversely, when robot 1 100A is commanded to wait due to a low passage priority, its motion status value is changed to OnEvasionPath, and it will stop or perform avoidance driving without passing.

Herein, the robot commanded to pass through the section is classified as a passing client, and the robot commanded to wait for driving is classified as a pending client, with each performing the motion corresponding to its motion status value.

When robot 1 100A reaches the entry point ③ of the margin section before the critical zone 414, for example, the third section 413, the position status value of robot 1 100A is changed to a second position status value, that is, InCriticalZone, and the server 100 considers robot 1 100A to have occupied the critical zone 414.

Although robot 1 100A has not actually occupied the critical zone 414, the server 100 is caused to recognize the occupancy state in advance, starting from the margin section, thereby preventing errors caused by a network delay, robot kinetic inertia, and map characteristics.

Then, when robot 1 100A reaches the entry point ④ of the actual critical zone on the map, the server 100 recognizes that robot 1 100A is present within the critical zone 414. The entry point ④ of the critical zone is a boundary node of the critical zone 414 and serves as a reference point for calculating all distances related to the control zone, such as the lengths of the plurality of margin sections and expected separation distances between the robots.

When robot 1 100A drives up to the exit point ⑤ of the critical zone, the server considers that robot 1 100A has ended its occupancy of the critical zone 414, with the margin section extending up to the end time ⑥ of the occupancy of the critical zone by the robot.

Accordingly, the position status value of robot 1 100A is transmitted to the server 100 as being in the free zone, and the server 100 deletes robot 1 100A from the list. When robot 1 100A is deleted from the list, the priorities of the other robots in the list are automatically changed.

With reference to FIGS. 5 to 7, a method for calculating expected separation distances between robots existing around a critical zone will be described below.

FIG. 5 is a diagram illustrating that the critical zone described in the present disclosure is not limited to a specific shape. In other words, a driving path in which a robot enters and passes through the critical zone does not need to be at a right angle.

For example, as illustrated on the left side of FIG. 5, a control zone including a critical zone may include a plurality of links L1, L2, and L3 with different driving directions. In this case, as illustrated on the right side of FIG. 5, a path formed by the plurality of links L1, L2, and L3 may be represented as if it were unfolded into a single straight line. The plurality of margin sections 411, 412, 413, and 415 and the critical zone 414 described above with reference to FIG. 4 are considered to be represented as the path formed by the plurality of links L1, L2, and L3 unfolded into a single straight line with respect to a total driving distance (or a total driving time). According to this logic, the embodiments disclosed in the present disclosure are applicable regardless of the shape of the critical zone.

Therefore, according to FIG. 5, the present disclosure may be applied to a map of any shape set as a critical zone, without the shape of an intersection needing to be at a right angle. Further, depending on the definition of the critical zone, it may be widely applied not only to an intersection but also to a narrow passage and a one-way link path.

Further, it is assumed that the robot moves at a constant velocity in the links between the boundary points ①, ②, ③, and ④ of the sections where the driving direction changes. Therefore, an expected arrival time for each of the boundary points ①, ②, ③, and ④ is a value obtained by dividing the length of each section by the speed, that is, $L\_1/V, L\_2/V,$ and $L\_3/V$.

According to the above concept, when the robot passes the boundaries of the plurality of margin sections 411, 412, 413, and 415, the direction or state value of the constant-velocity motion changes, and the server 100 may calculate how far in the future the robot will encounter each boundary point from a current time.

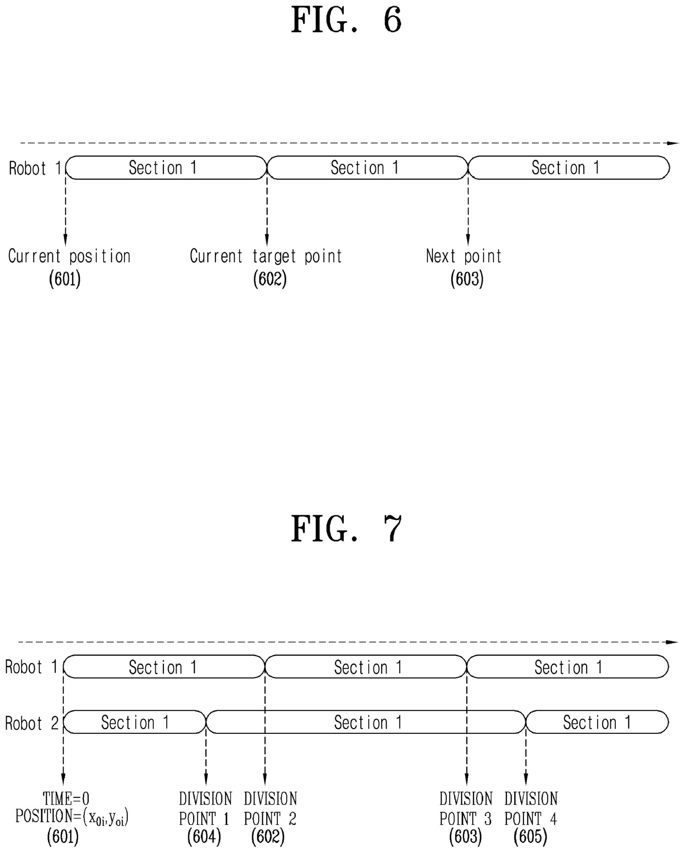

Referring to FIG. 6, a path of a robot in a control zone is a set of points. For example, a path of robot 1 may be described as a set of a current position $(x, y)$ 601, a target point $(x\_1, y\_1)$ 602, and a next target point $(x\_2, y\_2)$ 603. In this case, FIG. 6 represents sections in which robot 1 moves at a constant velocity, based on a total driving distance.

When two robots are to collide in the control zone, the distance between the centers of the two robots should be less than the sum of their radii. Therefore, the system may identify whether the positions of the robots based on their expected arrival times at each point during driving along their respective paths satisfy the collision condition.

With reference to FIG. 7, a method for calculating an expected separation distance between two robots will be described below in detail. That is, on the assumption that robot 1 and robot 2 move at a constant velocity during driving in their respective sections, FIG. 7 represents each of their respective sections based on a total driving distance.

When collision detection is performed for N robots, it is assumed that each robot moves at its own constant speed (Scalar). In this case, each robot may be said to move at a constant velocity (Vector) in its section, while driving between path points (e.g., 601, 602, and 603 for robot 1 and 601, 604, and 605 for robot 2).

When each point (e.g., 601, 602, and 603 for robot 1 and 601, 604, and 605 for robot 2) where a path section is switched is expressed as a pair of time and position, it is named a division point. The server 100 creates a list of division points for each robot, merges two lists, and sorts them in ascending order of time, thereby calculating expected separation distances between the two robots and the minimum value of the expected separation distances. (Through the ascending sorting by time, it may now be assumed that both robot 1 and robot 2 move at a constant velocity during a section between every two division points).

If the two robots are to collide, the calculated minimum value of the expected separation distances should be less than a value corresponding to a collision condition. An equation for calculating an expected separation distance between two robots is as follows.

[Equation 1]

$$D^2 = (\triangle v_{x^2_{ij}} + \triangle v_{y^2_{ij}}) \cdot t^2 + 2(\triangle x_{0ij} \cdot \triangle v_{xij} + \triangle y_{0ij} \cdot \triangle v_{yij}) \cdot t + (\triangle x_{0^2_{ij}} + \triangle v_{0^2_{ij}})$$

A process of deriving the above equation is as follows.

$$P_i(t) = \begin{bmatrix} x_i(t) \\ y_i(t) \end{bmatrix} = \begin{bmatrix} x_{i0} + v_{ix} \cdot t \\ y_{i0} + v_{iy} \cdot t \end{bmatrix}$$

and this may be rearranged as follows.

$$|D_{ij}|^2 = (x_{i0} + v_{ix} \cdot t - x_{j0} - v_{jx} \cdot t)^2 + (y_{i0} + v_{iy} \cdot t - y_{j0} - v_{jy} \cdot t)^2$$

$$|D_{ij}|^2 = \{(x_{i0} - x_{j0}) + (v_{ix} - v_{jx}) \cdot t\}^2 + \{(y_{i0} - y_{j0}) + (v_{iy} - v_{jy}) \cdot t\}^2$$

Herein, x $x_{io}$, $y_{io}$ represents an initial position of an $i^{th}$ robot. $v_{ix}$, $v_{iy}$ represents the velocity components of the $i^{th}$ robot in x and y directions.
By defining $x_j - x_i \equiv \triangle x_{ij}$, it is rearranged as follows.

$$|D_{ij}|^2 = (\triangle x_{0ij} + \triangle v_{xij} \cdot t)^2 + (\triangle y_{0ij} + \triangle v_{yij} \cdot t)^2$$

$$|D_{ij}|^2 = (\triangle v_{x^2_{ij}} + \triangle v_{y^2_{ij}}) \cdot t^2 + 2(\triangle x_{0ij} \cdot \triangle v_{xij} + \triangle y_{0ij} \cdot \triangle v_{yij}) \cdot t + (\triangle x_{0^2_{ij}} + \triangle v_{0^2_{ij}})$$

The occurrence of a collision and an expected collision point may be calculated by calculating expected separation distances between a plurality of robots and determining whether the minimum value of them satisfies the collision condition in this manner.
As described above, according to the robot driving control system and the robot control method disclosed in the present disclosure, a critical zone may be designated regardless of the location and shape of an area requiring traffic control, and robust traffic control is possible in the critical zone even if a positioning error occurs due to a slightly unstable network environment. Further, expected separation distances and the possibility of a collision between robots with different driving directions may be calculated and obtained with relatively low time complexity.

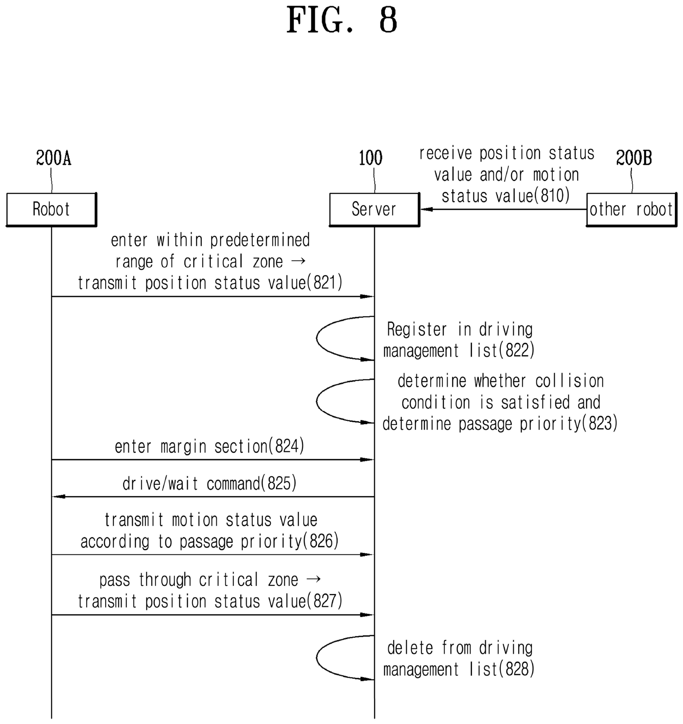

FIG. 8 is a flowchart illustrating a method for driving through a critical zone without a collision by a robot under the control of a server, in relation to the present disclosure.
In FIG. 8, robot 200A is defined as a robot that has entered within a predetermined range of a defined critical zone, and the other robot 200B is defined as one or more robots that are present around the critical zone and are registered in a list for driving control by the server.
The server 100 receives a position status value and/or a motion status value from the registered other robot 200B 810 and performs a routine (determining whether a collision condition is satisfied, and determining the passage priorities of the robots) for performing corresponding driving control.
When a robot attempting to pass the critical zone is added, the routine is repeatedly performed by including the added robot, as described below.
Specifically, when robot 200A enters within the predetermined range of the critical zone, a position status value changed upon passing the coordinates of a corresponding point is transmitted to the server 100 (821).
In response to the changed position status value being transmitted from robot 200A, the server 100 registers robot 200A in the list for driving management (822). Specifically, the server 100 may store one or more of identification information (e.g., ID, specification info, and so on), position information, and status information of robot 200A in a memory stack/queue corresponding to the list.
At this time, the server 100 may be maintained in a state where it is capable of transmitting a driving control command (stop/continue driving) to robot 200A.
Thereafter, the server 100 determines whether robot 200A satisfies the collision condition in relation to the other robot 200B and determines a corresponding passage priority (823).
Specifically, the server 100 repeatedly performs the routine of calculating expected separation distances with the already registered other robot 200B, including the newly added robot 200A in the list, determining whether the collision condition is satisfied, and determining a passage priority. This routine may be repeatedly performed, when another robot is newly registered in the list or when a robot previously registered in the list is deleted.

Subsequently, when robot 200A reaches an entry point of a margin distance section ('margin area') set around the critical zone, a corresponding changed position status value is transmitted to the server 100 (824).

Accordingly, the server 100 immediately transmits a driving control command corresponding to the passage priority determined by performing the routine, for example, a drive/wait/avoidance drive command, to robot 200A (825). Consequently, a collision may be prevented in advance before robot 200A reaches an expected collision point.

robot 200A transmits a changed motion status value corresponding to the passage priority, for example, a motion status value corresponding to stop/drive, received from the server 100 to the server 100 (826).

Thereafter, when robot 200A passes the margin section and occupies and passes through the critical zone, it indicates that robot 200A is in a state of occupying the critical zone by transmitting a changed position status value to the server 100 (827).

Then, the server 100 deletes robot 200A from the driving management list immediately or after a predetermined time (or after passing a final margin section to ensure that robot 200A has completely left the critical zone) (828).

As described above, in the robot driving control system and the robot control method according to an embodiment of the present disclosure, when a plurality of robots approach a critical zone, the system commands the robots to stop at appropriate locations according to their priorities, thereby allowing them to wait and drive in an orderly manner based on the control. This significantly reduces situations where a manager should intervene to resolve congestion, and prevents accidents where robots collide and are damaged. Further, the critical zone may be designated regardless of the location and shape of an area requiring traffic control, and robust traffic control is possible in the critical zone even if a positioning error occurs due to a slightly unstable network environment. Further, without relying on sensors of the robots or short-range communication between the robots, the server calculates expected separation distances between the plurality of robots to identify an expected collision point, allowing a robot to wait for driving at an appropriate location within a margin distance before a collision, and to immediately resume driving when the collision risk is resolved.

The additional scope of applicability of the present disclosure will become apparent from the following detailed description. However, various changes and modifications within the spirit and scope of the present disclosure may be clearly understood by those skilled in the art, and thus, specific embodiments such as the detailed description and preferred embodiments of the present disclosure are to be understood as being given by way of example only.

Further, the features, structures, effects, and so on described in the embodiments above are included in at least one embodiment of the present disclosure and are not necessarily limited to only one embodiment. Moreover, the features, structures, effects, and so on exemplified in each embodiment may be combined or modified and implemented for other embodiments by those skilled in the art, without departing from the essential characteristics of the present disclosure. Therefore, contents related to these combinations and variations should be construed as being included within the scope of the present disclosure.

Also, although the above description is given centering on embodiments, they are merely examples and do not limit the present disclosure, and it will be understood by those skilled in the art that various modifications and applications not exemplified above are possible without departing from the essential characteristics of the embodiments. For example, each component specifically shown in an embodiment may be modified and implemented. And differences related to these modifications and applications should be construed as being included within the scope of the present disclosure as defined by the appended claims.

**Claims**

1. A robot driving control system comprising:

    a plurality of robots driving in a predetermined space on a map; and
    a server recognizing the predetermined space on the map as being divided into a plurality of zones, and controlling driving of an entering robot to pass through a critical zone requiring traffic control among the plurality of zones by communicating with the plurality of robots,
    wherein the server configures to:

    register the entering robot in a driving management list based on the entering robot entering within a predetermined range of the critical zone,
    determine whether the entering robot satisfies a collision condition by considering moving directions of other robots around the critical zone, and
    control the entering robot to drive according to a predetermined passage priority based on the determination.

2. The robot driving control system of claim 1, wherein the other robots are robots already registered in the driving management list, and
wherein the server calculates a minimum value of expected separation distances between the entering robot and the other robots by considering a driving direction of the entering robot and the moving directions of the other robots, and determines whether the collision condition is satisfied based on the calculated minimum value.

3. The robot driving control system of claim 2, wherein the server calculates expected arrival times of the entering robot and the other robots, respectively, for each of entry points of a plurality of margin sections set around a boundary node of the critical zone, from a first point where the entering robot enters the predetermined range to a second point that the entering robot reaches after driving a predetermined distance past the critical zone, and calculates the minimum value of the expected separation distances based on the calculated expected arrival times for each entry point.

4. The robot driving control system of claim 3, wherein a distance between the entry points of the plurality of margin sections is changeable based on at least one environmental factor among physical characteristics of the robot, a speed profile of the robot, a network delay environment, and characteristics of the map.

5. The robot driving control system of claim 3, wherein when the calculated minimum value of the expected separation distances is less than or equal to a threshold, the server determines that the collision condition is satisfied, and transmits a control command for controlling the driving of the entering robot before the entering robot reaches a point where the collision condition is satisfied.

6. The robot driving control system of claim 5, wherein the server transmits a first control command for the entering robot to stop or perform avoidance driving before the entering robot reaches the point where the collision condition is satisfied before reaching the critical zone.

7. The robot driving control system of claim 6, wherein in response to the entering robot not satisfying the collision condition or the passage priority being a highest priority, the server transmits a second control command for the entering robot to drive through the critical zone, and updates passage priorities of the robots in the list.

8. The robot driving control system of claim 1, wherein the server registers the entering robot in the list at a time when a changed first position status value is transmitted from the entering robot, and sequentially determines the collision condition and the passage priority of the entering robot, including passage priorities of the other robots registered in the list.

9. The robot driving control system of claim 8, wherein when the server transmits a driving control command to the entering robot according to the predetermined passage priority, the entering robot transmits a motion status value corresponding to the transmitted control command to the server and performs a motion corresponding to the motion status value.

10. The robot driving control system of claim 8, wherein in response to a position of the entering robot reaching the critical zone, the entering robot transmits a changed second position status value to the server, and
wherein the server deletes the entering robot from the list.

11. A robot control method including a plurality of robots driving in a predetermined space on a map and a server communicating with the plurality of robots, the method comprising:

recognizing the predetermined space on the map as being divided into a plurality of zones by the server;
detecting that an entering robot to pass through a critical zone requiring traffic control among the plurality of zones enters a predetermined range of the critical zone by the server;
determining whether the entering robot satisfies a collision condition by considering moving directions of other robots around the critical zone by the server; and
controlling the entering robot to drive according to a predetermined passage priority based on the determination by the server.

12. The robot control method of claim 11, wherein the other robots are robots already registered in the driving management list, and
wherein determining whether the collision condition is satisfied includes calculating a minimum value of expected separation distances between the entering robot and the other robots by considering a driving direction of the entering robot and the moving directions of the other robots, and determining whether the collision condition is satisfied based on the calculated minimum value.

13. The robot control method of claim 12, wherein determining whether the collision condition is satisfied includes:

calculating expected arrival times of the entering robot and the other robots, respectively, for each of entry points of a plurality of margin sections set around a boundary node of the critical zone, from a first point where the entering robot enters the predetermined range to a second point that the entering robot reaches after driving a predetermined distance past the critical zone, and calculating the minimum value of the expected separation distances based on the calculated expected arrival times for each entry point; and
when the calculated minimum value of the expected separation distances is less than or equal to a threshold, determining that the collision condition is satisfied.

14. The robot control method of claim 13, wherein a distance between the entry points of the plurality of margin sections is changeable based on at least one environmental factor among physical characteristics of the robot, a speed profile of the robot, a network delay environment, and characteristics of the map.

15. The robot control method of claim 13, wherein controlling the driving of the entering robot includes transmitting a control command for controlling driving of the entering robot before the entering robot reaches a point where the collision condition is satisfied.

16. The robot control method of claim 15, wherein transmitting the control command includes transmitting a first control command for the entering robot to stop or perform avoidance driving before the entering robot reaches the point where the collision condition is satisfied before reaching the critical zone.

17. The robot control method of claim 16, wherein transmitting the control command includes:

in response to the entering robot not satisfying the collision condition or the passage priority being a highest priority, transmitting a second control command for the entering robot to drive through the critical zone; and
updating passage priorities of the robots in the list by the server, after transmitting the second control command.

18. The robot control method of claim 11, wherein determining whether the collision condition is satisfied includes registering the entering robot in the list at a time when a changed first position status value is transmitted from the entering robot to the server, and sequentially determining the collision condition and the passage priority of the entering robot, including passage priorities of the other robots registered in the list.

19. The robot control method of claim 18, wherein controlling the driving of the entering robot includes:

transmitting a driving control command to the entering robot according to the predetermined passage priority by the server; and
transmitting a motion status value corresponding to the transmitted control command to the server and performing a motion corresponding to the motion status value by the entering robot.

20. The robot control method of claim 19, wherein controlling the driving of the entering robot includes:

in response to a position of the entering robot reaching the critical zone, transmitting a changed second position status value to the server by the entering robot; and
deleting the entering robot from the list by the server.

# FIG. 1

# FIG. 2

# FIG. 3

Recognize predetermined space on map by dividing it into plural zones — 310

Detect that robot attempting to pass through critical zone requiring traffic control among plural zones enters within predetermined range of critical zone — 320

Register entering robot in driving management list and determine whether entering robot satisfies collision condition by considering moving directions of other robots around critical zone — 330

Control driving of entering robot for entering robot to drive according to predetermined passage priority based on determination — 340

# FIG. 4

# FIG. 5

# FIG. 6

Robot 1 | Section 1 | Section 1 | Section 1

Current position
(601)

Current target point
(602)

Next point
(603)

# FIG. 7

Robot 1 | Section 1 | Section 1 | Section 1

Robot 2 | Section 1 | Section 1 | Section 1

TIME=0
POSITION=$(x_{0i}, y_{0i})$
(601)

DIVISION
POINT 1
(604)

DIVISION
POINT 2
(602)

DIVISION
POINT 3
(603)

DIVISION
POINT 4
(605)

# FIG. 8

## INTERNATIONAL SEARCH REPORT

| International application No. |
|---|
| **PCT/KR2023/005925** |

| | | |
|---|---|---|
| **A.** | **CLASSIFICATION OF SUBJECT MATTER** | |
| | **G05D 1/20**(2024.01)i; **B25J 9/16**(2006.01)i | |

According to International Patent Classification (IPC) or to both national classification and IPC

| | |
|---|---|
| **B.** | **FIELDS SEARCHED** |

Minimum documentation searched (classification system followed by classification symbols)

G05D 1/20(2024.01); B25J 11/00(2006.01); B25J 13/00(2006.01); B25J 19/02(2006.01); B25J 5/00(2006.01); B25J 9/16(2006.01); G05D 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 로봇(robot), 서버(server), 교통 제어(traffic control), 위험구역(danger zone), 충돌(collision), 우선순위(priority), 주행 관리(driving management), 리스트(list)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-1620290 B1 (KOREA UNIVERSITY RESEARCH AND BUSINESS FOUNDATION) 24 May 2016 (2016-05-24)<br>See paragraphs [0025]-[0026], [0038]-[0043] and [0060]; claim 1; and figures 1, 3 and 7. | 1-20 |
| DY | KR 10-2021-0156413 A (CLOBOT CO., LTD.) 27 December 2021 (2021-12-27)<br>See paragraphs [0032]-[0038] and [0042]-[0044]; and figures 1 and 3. | 1-20 |
| A | KR 10-2462491 B1 (NAVER LABS CORPORATION) 03 November 2022 (2022-11-03)<br>See paragraphs [0032]-[0041]; and figure 1. | 1-20 |
| A | KR 10-2021-0111013 A (QURIBO CO., LTD. et al.) 10 September 2021 (2021-09-10)<br>See paragraphs [0050]-[0084]; and figures 4a-5. | 1-20 |
| A | KR 10-1215395 B1 (UNIVERSITY-INDUSTRY COOPERATION GROUP OF KYUNG HEE UNIVERSITY) 26 December 2012 (2012-12-26)<br>See paragraphs [0035]-[0048]; and figures 4-7. | 1-20 |

| | |
|---|---|
| ✓ Further documents are listed in the continuation of Box C. | ✓ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 January 2024** | **26 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005925**

C.    DOCUMENTS CONSIDERED TO BE RELEVANT

| Category* | Citation of document, with indication, where appropriate, of the relevant passages | Relevant to claim No. |
|---|---|---|
| | 박현진. LG전자, 인공지능 물류 플랫폼 기업 `파스토'와 차세대 '물류 로봇' 시장 공략 속도낸다. 인공지능신문. 17 October 2022 (PARK, Hyeonjin. LG Electronics Inc, is Speeding Up Its Efforts to Target the Next-Generation 'Logistics Robot' Market with 'Fassto', an Artificial Intelligence Logistics Platform Company. AI Times). [Retrieved on 08 January 2024]. Retrieved from <URL: https://www.aitimes.kr/news/articleView.html?idxno=26269>. | |
| X | See entire document.<br><br>* This document is a known document declaring exceptions to lack of novelty by the applicant. | 1-20 |

**INTERNATIONAL SEARCH REPORT**
Information on patent family members

International application No.

**PCT/KR2023/005925**

| Patent document cited in search report | | | Publication date (day/month/year) | Patent family member(s) | | | Publication date (day/month/year) |
|---|---|---|---|---|---|---|---|
| KR | 10-1620290 | B1 | 24 May 2016 | KR | 10-2015-0137166 | A | 09 December 2015 |
| KR | 10-2021-0156413 | A | 27 December 2021 | KR | 10-2022-0113910 | A | 17 August 2022 |
| | | | | KR | 10-2593662 | B1 | 25 October 2023 |
| KR | 10-2462491 | B1 | 03 November 2022 | KR | 10-2462500 | B1 | 03 November 2022 |
| | | | | WO | 2022-234925 | A1 | 10 November 2022 |
| KR | 10-2021-0111013 | A | 10 September 2021 | KR | 10-2341703 | B1 | 21 December 2021 |
| KR | 10-1215395 | B1 | 26 December 2012 | KR | 10-2012-0012285 | A | 09 February 2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220010883
- KR 1020060083345

- KR 1020210156413